# EUROPEAN PATENT APPLICATION

(11) **EP 2 426 457 A2**
(43) Date of publication of application: **07.03.2012**
(21) Application number: 09841578.9
(22) Date of filing: 17.12.2009
(51) Int. Cl.: G01B 11/16, G02B 13/00, G02B 5/00

(54) **INSPECTION DEVICE FOR DEFECT INSPECTION**

(30) Priority: 09.03.2009 KR 20090019652
(71) Applicant: 3B System Inc., Daegu 704-320 (KR)
(72) Inventor: Lee, Je Sun, Suwon-si Gyeonggi-do 440-300 (KR); Chang, Ki Soo, Daegu 706-100 (KR)
(74) Representative: Chaillot, Geneviève
(86) International application number: PCT/KR2009/007560
(87) International publication number: WO 2010/104265

(57) **Abstract**

The present invention comprises an inspection method for transparent or reflective inspection objects, by using a retro-reflective plate as a convex lens or concave mirror in such a way that defects can be detected in a stable fashion even if the inspection object is curved or if vibration occurs during movement of the inspection object; in which displacement of parallel light passing through or reflected in a measurement field is captured by using changes which occur in an inspection field, namely changes in the density gradient in the case of transmission inspection or in the reflection angle in the case of reflection inspection. The present invention also comprises an inspection device for defect inspection, in which a knife edge is provided, horizontally to the optical axis, on the front surface of a camera lens for collecting the transmitted light or reflected light, in such a way that three-dimensional defect images can be obtained since any light which diverges from the parallel light is blocked with consequent changes in the contrast of the light due to the density gradient in the inspection field at the camera.

## Description

### [Technical Field]

The present invention relates to an inspection device for inspecting defects, such as bubbles, minor deformation, foreign matter, pores, and the like, formed inside or on an inspection object such as an opaque or transparent sheet. More particularly, the present invention relates to an inspection device which includes a knife edge and a retro-reflective plate to provide clear images of defects in stability even when an inspection object is subjected to vibration or has a bent portion.

### [Background Art]

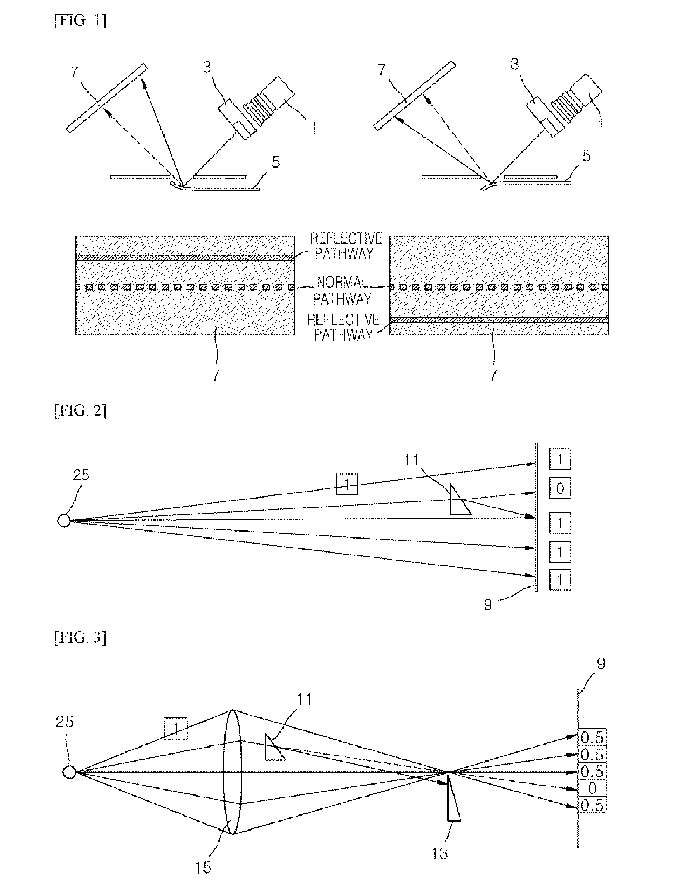

Fig. 1 shows sheet beams incident on a reflective plate bent upwards or downwards in a general reflector optical system.

The left side of Fig. 1 shows to an optical pathway formed by an inspection object bent upwards at one end thereof, and the right side of Fig. 1 show an optical pathway formed by an inspection obj ect bent downwards at one end thereof.

As shown at the left of Fig. 1, when a sheet beam is emitted from a light source 3 to an inspection object 5 along the same pathway as an optical axis of a camera 1, the sheet beam is reflected by the inspection object 5 and is then incident on a reflector 7.

When the inspection object 5 is not bent, the light reflected by the inspection object 5 is incident on the reflector 7 along a pathway indicated by a dotted line and is then reflected by the reflector 7. Then, the light reflected by the reflector 7 enters the camera 1, so that the camera 1 photographs an image of the inspection object 5. On the contrary, when illuminated to an upwardly bent portion of the inspection object 5, a sheet beam is incident on the reflector 7, as indicated by a solid line. Here, since the light reflected by the reflector 7 is not incident again on the inspection object 5, the camera 1 cannot photograph the image of the inspection object 5.

An image at a left lower side of Fig. 1 is obtained from a sheet beam incident on the reflector 7, in which a dotted line indicates that the sheet beam is reflected by a normal portion, and a solid line indicates that the sheet beam is reflected by a bent portion.

Further, when reflected by a downwardly bent portion of the inspection object, the sheet beam is incident on the reflector 7 along a pathway separated downwards from a normal pathway indicated by a dotted line at a right upper side of Fig. 1. Thus, when viewing the front side of the reflector 7, a bright line (solid line) is formed at a portion separated downwards from a bright line (dotted line) which can be formed by the sheet beam traveling along the normal pathway. If the inspection object 5 is a normal sheet, the light reflected by the reflector 7 travels along a normal pathway and is reflected back by the inspection object 5, thereby forming an image of the inspection object 5 on the camera 1. Here, the reflector 7 is a general reflector on which light is incident at the same angle as the reflective angle of the light. Thus, if the inspection object 5 is abnormally bent, the light reflected by the reflector 7 cannot reach the surface of the inspection object 5, so that the camera 1 cannot capture an image of the inspection object 5 when the inspection object 5 has a bent portion.

Such a phenomenon can also be applied to the case where the inspection object 5 vibrates.

Fig. 2 is an optical diagram explaining refraction caused by a defect when a conventional light source illuminates an inspection object.

Assuming that light is uniformly illuminated on a screen 9 from a point light source such as a light source 25, brightness of the screen 9 will be defined as a brightness unit of 1. At this time, an abnormality, such as abnormal density, foreign matter, and the like (that is, defects) on an optical pathway can vary a refractive angle. When the light is refracted by a defect 11, the light does not reach a point through which an optical pathway (dotted line) passes in the case where the defect 11 is not present. As a result, a portion on the screen 9 where the dotted line terminates has a brightness unit of 0, and a portion on the screen 9 where the light refracted by the defect 11 strikes has a brightness unit of 2.

As such, when brightness is rapidly varied to a brightness unit of 0 on a dark region and a brightness unit of 2 on a bright region by the defect 11, an accurate image of the defect 11 cannot be obtained due to such a steep gradient of brightness between the bright region and the dark region. Namely, such rapid variation in brightness does not provide a brightness gradient and causes only an outline of the defect 11 to be formed on the screen 9, thereby making it difficult to recognize an actual shape of the defect 11.

### [Disclosure]

### [Technical Problem]

The present invention is directed to solving such problems of the related art, and one aspect of the present invention is to provide an inspection device which employs a knife edge for blocking light to form an image having a brightness gradient, thereby providing an accurate shape of a defect.

Another aspect of the present invention is to provide an inspection device which is capable of accurately photographing an inspection object based on properties of light reflected back by a retro-reflector at the same angle as the incident angle of the light on the retro-reflector even in the case where the inspection object has a bent portion, and which is capable of accurately photographing the inspection object by allowing incident light to be reflected back by the retro-reflector without being affected by vibration, even in the case where the inspection object is subjected to vibration.

### [Technical Solution]

In accordance with one aspect of the present invention, an inspection device includes: a light source illuminating a reflective inspection object which reflects light incident thereon; a retro-reflector plate reflecting the light back to the reflective inspection object when the light reflected by the reflective inspection object is incident on the retro-reflector plate; a focusing lens focusing the light which is reflected by the reflective inspection object after being reflected back to the reflective inspection object by the retro-reflector plate; a camera capturing the light passing through the focusing lens to form an image; and a plate-shaped knife edge disposed between the focusing lens and the reflective inspection object to be perpendicular to an optical axis of the focusing lens.

In accordance with another aspect of the present invention, an inspection device includes: a light source illuminating a transmissive inspection object which allows incident light to pass therethrough; a retro-reflector plate reflecting the light back to the transmissive inspection object when the light passing through the transmissive inspection object is incident on the retro-reflector plate; a mask formed with a slit and disposed between the light source and the transmissive inspection object; a camera capturing the light to form an image; a focusing lens focusing the light on the camera when the light reflected back by the retro-reflector plate passes through the transmissive inspection object and reaches the focusing lens; and a plate-shaped knife edge disposed between the focusing lens and the transmissive inspection object to be perpendicular to an optical axis of the focusing lens.

### [Advantageous Effects]

According to embodiments of the invention, the inspection device employs a knife-edge to provide a highly sensitive image having a gentle brightness gradient, thereby providing a clear image of a defect in an inspection object.

In addition, the inspection device employs a retro-reflective plate to allow a user to stably recognize a defect of an inspection object even in the case where the inspection object has a rounded portion or is subjected to vibration.

### [Description of Drawings]

Fig. 1 shows sheet beams incident on a reflective plate bent upwards or downwards in a general reflector optical system;
Fig. 2 is an optical diagram explaining refraction caused by a defect when a conventional light source illuminates an inspection object;
Fig. 3 is an optical diagram explaining a principle of a knife edge in an inspection device according to the present invention;
Fig. 4 is an optical diagram explaining a pathway of light passing through an inspection obj ect according to the present invention;
Fig. 5 is an optical diagram explaining a pathway of light reflected on a surface of an inspection object according to the present invention;
Fig. 6 is a diagram of an inspection device according to one embodiment of the present invention when used for inspection of a transparent sample;
Fig. 7 is an optical diagram explaining an optical pathway of Fig. 6;
Fig. 8 is a three-dimensional graph of an image of a defect photographed by the inspection device according to the embodiment of the present invention;
Fig. 9 is an optical diagram explaining an optical pathway without the knife edge for comparison with Fig. 7;
Fig. 10 is an optical diagram explaining insensitibility of a retro-reflector plate with respect to vibration according to the present invention;
Fig. 11 is an optical diagram explaining recollection of light on a focal point by the retro-reflector plate acting as a concave mirror according to the embodiment of the present invention;
Fig. 12 shows an optical pathway with respect to a reflective inspection object in an inspection device according to another embodiment of the present invention; and
Fig. 13 is a diagram explaining effects of the knife edge with respect to an image and brightness when a knife edge is applied to the reflective inspection object.

### [Mode for Invention]

Exemplary embodiments of the invention will be described in detail with reference to the accompanying drawings.

Fig. 3 is an optical diagram explaining a principle of a knife edge in an inspection device according to the present invention.

A point light source 25 is located on a left focal point of a field lens 15, and light emitted from the light source 25 is illuminated on a screen 9 through a right focal point of the field lens 15. When there is a defect 11 between the field lens 15 and the right focal point of the field lens 15, an optical pathway of light passing through the defect 11 is refracted from a normal optical pathway indicated by a dotted line to terminate instead of passing through an edge located on the right focal point, that is, a knife edge 13 which may have a sharp plate-shape end.

In addition, assuming that the intensity of light emitted from the light source 25 shown in Fig. 3 is the same as the intensity of light emitted from the light source 25 shown in Fig. 2, and that each point on the screen in Fig. 2 has a brightness unit of 1, since only half of the light passing through the field lens 15 is allowed to illuminate the screen 9 by the knife edge 13, each point on the screen 9 in Fig. 3 has a brightness unit of 0.5. In Fig. 2, the light refracted by the defect 11 increases brightness of an adj acent point on the screen 9 to a brightness unit of 2. In Fig. 3, however, since the light refracted by the defect 11 is blocked by the knife edge 13, the light does not increase the brightness of the adjacent point on the screen 13. Specifically, in Fig. 3, assuming the light reaches a certain point on the screen along a normal optical pathway indicated by a dotted line when the defect 11 is not present, the light does not reach the certain point on the screen when the defect 11 is present, so that the certain point has a brightness unit of 0. Even in this case, however, an adjacent point on the screen does not undergo brightness variation. As a result, when some of the light is blocked by the knife edge 13 as shown in Fig. 3, the brightness variation caused by the defect 11 becomes insignificant on the screen 11, thereby providing a brightness gradient on the screen. Accordingly, when the knife edge 13 is used as in Fig. 3, it is possible to obtain a clear image of an inspection object, which has not only an outline of the inspection object but also a brightness gradient.

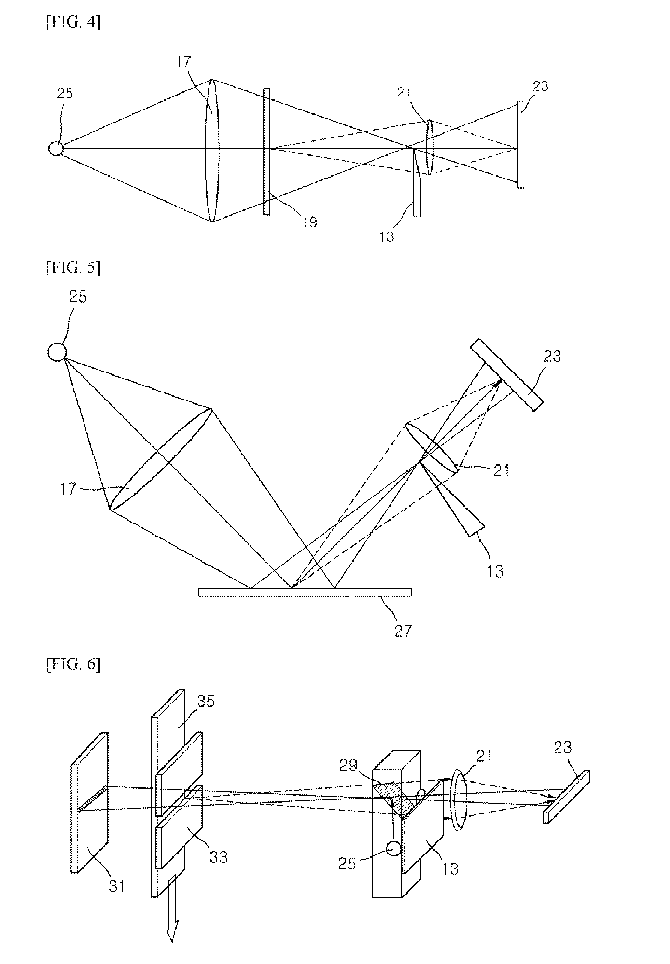

Fig. 4 is an optical diagram explaining a pathway of light passing through an inspection object according to the present invention, and Fig. 5 is an optical diagram explaining a pathway of light reflected on a surface of an inspection obj ect according to the present invention.

Referring to Fig. 4, a light source 25 for generating a sheet beam is located on a left focal point of a field lens 17, a knife edge 13 is located on a right focal point of the field lens 17, and an inspection object 19 is located between the field lens 17 and the knife edge 13. Light passing through the inspection object 19 is collected by a focusing lens 21 to form an image of the transparent obj ect on a line CCD 23.

The knife edge 13 is disposed perpendicular to an optical axis of the focusing lens 21 and has a leading end adjacent the optical axis, thereby making it possible to provide a clear image of a defect formed on the inspection object 19, which clearly shows surface curvature or an internal defect.

Further, referring to Fig. 5, a light source 25 and a field lens 17 are disposed above an inspection object 27 such that light strikes the surface of the inspection object at a tilted angle. Then, the light reflected from the surface of the reflective inspection object 27 passes through a focusing lens 21 and forms an image on the line CCD 23. In this embodiment, the knife edge 13 is located on a focal point of the field lens 17 to form a clear image on the line CCD 23.

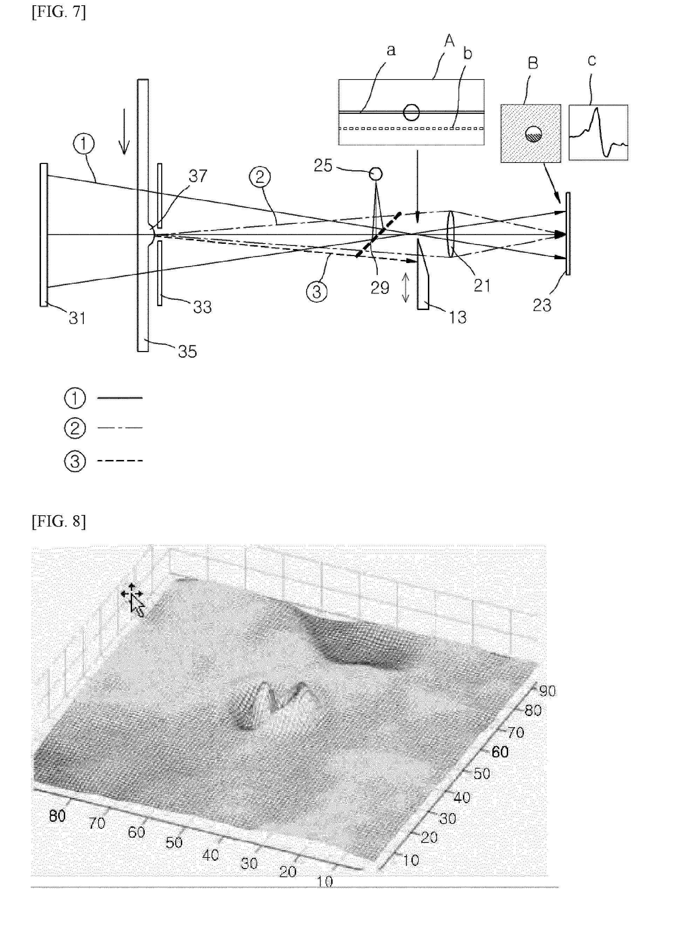

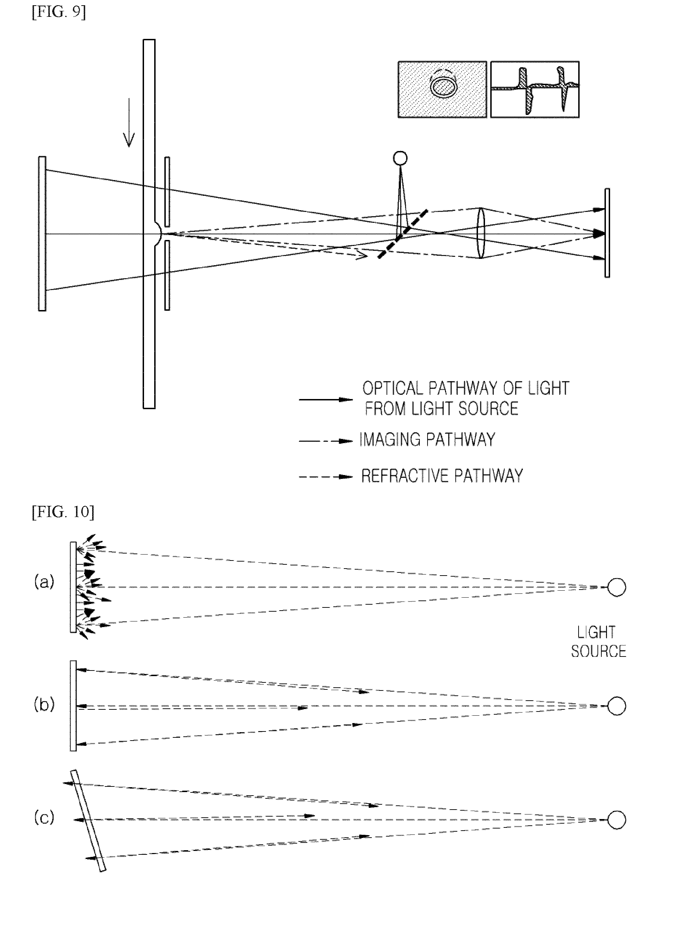

Fig. 6 is a diagram of an inspection device according to one embodiment of the present invention when used for inspection of a transparent sample, Fig. 7 is an optical diagram explaining an optical pathway of Fig. 6, Fig. 8 is a three-dimensional graph of an image of a defect photographed by the inspection device according to the embodiment of the present invention, and Fig. 9 is an optical diagram explaining an optical pathway without the knife edge for comparison with Fig. 7.

After being emitted from the light source 25 for generating a sheet beam, light is reflected by a half mirror 29 disposed at a tilted angle on the ground and strikes a retro-reflector plate 31 while traveling parallel to the ground. Then, the light is reflected back to the half mirror 29 by the retro-reflector plate 31. The light incident on the half mirror 29 passes through the half mirror 29 and is focused on the line CCD 23 through the focusing lens 21.

Further, a mask 33 is located between the retro-reflector plate 31 and the half mirror 29 to reduce interference of light traveling along several pathways by allowing the light to enter the retro-reflector plate 31 through a slit formed in the mask 33. Here, a transparent inspection object 35 is moved at the rear side of the mask 33 in an arrow direction to be scanned by the light.

Further, as the knife edge 13 is located at the left focal point of the focusing lens 21 on the optical axis, it is possible to obtain an intensity gradient of light based on the amount of light entering the focusing lens 21. In Fig. 7, "A" explains variation in amount of light according to movement of the knife edge 13, in which a solid line (a) indicates a state in which an upper end of the knife edge 13 is located coincident with the optical axis, and a dotted line (b) indicates a state in which an optical pathway is bent downwards due to variation in refractive angle of a sheet beam emitted from the light source by a convex defect 37 of an inspection object 35.

As shown in Fig. 7, an image of the transparent inspection object 35 is formed on the line CCD 23 through the optical pathway as indicated by □ in a normal state. On the other hand, when the transparent inspection object 35 has a convex defect 37, the light is refracted as indicated by □ and the refracted light □ is blocked by the knife edge 13 so that the refracted light cannot reach the line CCD 23 and an image of the defect becomes dark in the corresponding region on the line CCD 23.

Here, when the light emitted from the light source is incident on the retro-reflector plate 31, the retro-reflector plate 31 reflects the incident light back to the light source, thereby enabling the provision of an accurate image even in the case where the transparent inspection object 35 vibrates or has a bent portion. In Fig. 7, B is a scanned image on the line CCD 23 and C is a graph depicting the intensity of light along a cross-section of B. As can be seen from the image of B in Fig. 7, it is possible to obtain not only an outline of the defect but also the overall shape of the defect, and, as shown in the graph (C), a continuous curve is drawn between a bright region and a dark region to provide the intensity gradient of light. Here, since an image providing such an intensity gradient of light can be used to provide a three-dimensional image of the defect as shown in Fig. 8, it is possible to identify an accurate shape of the defect.

However, as shown in Fig. 9, when the knife edge is not used, only an outline of the defect can be obtained and brightness of the image is steeply changed, as can be seen from the graph of the amount of light, so that a brightness gradient and a three-dimensional image cannot be obtained.

Fig. 10 is an optical diagram explaining functions of a retro-reflector plate according to the present invention.

In Fig. 10, (a) shows an optical pathway of light which is emitted from a light source and strikes a general reflective plate. In this case, since the light is reflected in various directions by the reflective plate, a very small amount of light can be reflected towards the light source. In Fig. 10, (b) shows an optical pathway of light which is emitted from the light source and reflected by a retro-reflector plate disposed perpendicular to the light source. In this case, all of the light emitted from the light source is reflected towards the light source. Further, in Fig. 10, (c) shows an optical pathway of light which is emitted from the light source and reflected by a tilted retro-reflector plate. In this case, all of the light reflected by the retro-reflector plate also returns to the light source. This phenomenon means that all of light emitted from the light source returns to the light source, regardless of the tilted angle of the retro-reflector plate, when reflected by the retro-reflector plate.

In addition, when a tilted portion of a transparent inspection object is scanned while the transparent inspection object passes between the light source and the retro-reflector plate disposed perpendicular to the light source, the light passes through the tilted portion of the transparent inspection object, so that all of the light entering the retro-reflector plate is reflected back to the light source, thereby enabling the provision of a clear image of the tilted transparent inspection object.

Further, according to the invention, when the retro-reflector plate is used as a reflector, it is possible to obtain an accurate image even in the case where the inspection obj ect is subj ected to vibration.

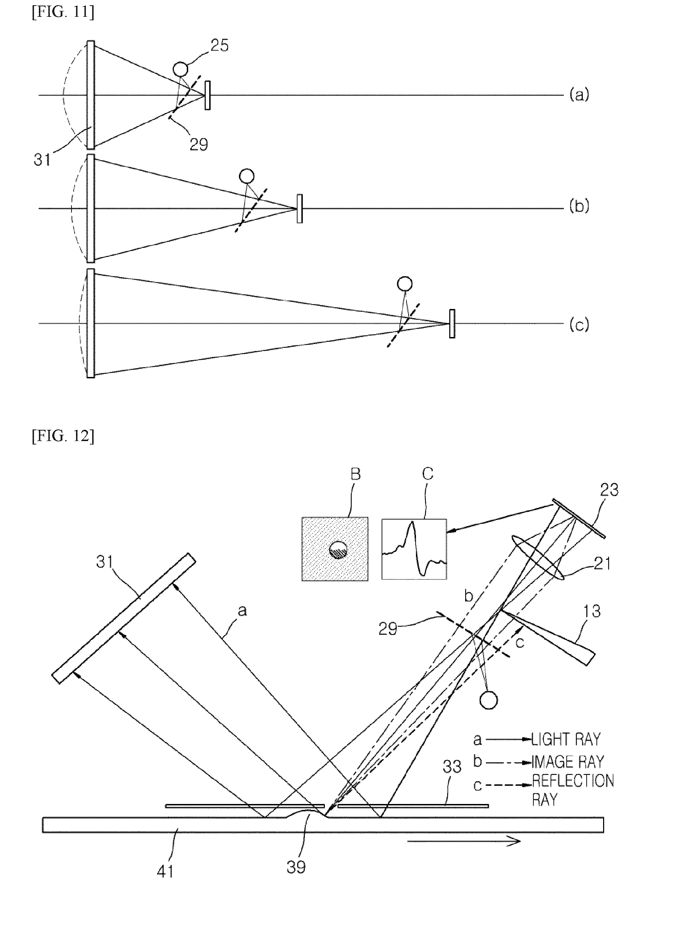

Fig. 11 is an optical diagram explaining recollection of light on a focal point by the retro-reflector plate acting as a concave mirror according to the embodiment of the present invention.

Fig. 11(a) shows an optical pathway of light which is emitted from the light source 25 is reflected by the half-mirror 29, reflected again by the retro-reflector plate 31 and collected on a focal point through the half mirror 29. In Fig. 11(b), although the light source 25 is located farther from the retro-reflector plate 31 than the light source 25 in Fig. 11(a), light reflected by the retro-reflector plate 31 is collected on a focal point as in the case where the light source 25 is located at the focal point, similar to the case shown in Fig. 11(a). In Fig. 11(c), although the light source 25 is located farther from the retro-reflector plate 31 than the light source 25 in Fig. 11(b), an optical pathway is formed to have a focal point as in the case where the point light source is located at the focal point.

As such, the light reflected by the retro-reflector plate 31 travels along an optical pathway which allows the light source 25 to act as a focal point, and when the distance between the light source 25 and the retro-reflector plate 31 varies, the optical pathway is formed to allow the light source 25 to act as a focal point. Therefore, when the distance between the inspection object 35 and the retro-reflector plate 31 or between the inspection object 35 and the light source 25 varies due to vibration while the inspection object 35 passes between the light source 25 and the retro-reflector plate 31, the light reflected by the retro-reflector plate 31 always travels along an optical pathway on which the light source 25 acts as a focal point, thereby providing an accurate image of the inspection object 35 upon vibration.

Fig. 12 shows an optical pathway with respect to a reflective inspection object in an inspection device according to another embodiment of the present invention.

A mask 33 having a slit is disposed on an upper surface of a reflective inspection object 41, and light emitted from a light source 25 is reflected by a half mirror 29 and strikes a reflective inspection object 41 at a constant tilted angle. Then, the light reflected by the reflective inspection object 41 is incident on a retro-reflector plate 31, reflected back to the reflective inspection object 41 by the retro-reflector plate 31, and is collected on a line CCD 23 through the half mirror 29 and a focusing lens 21. In this embodiment, a knife edge 31 is disposed at a place on which the light reflected back by the retro-reflector plate is collected.

When the reflective inspection object 41 has a convex defect 39 on an upper surface thereof, an optical pathway of light emitted from the light source is indicated by a line a, and an optical pathway for forming an image of the reflective inspection object 41 is indicated by a line b, and an optical pathway refracted by the convex defect 39 is indicated by a line c. Since the optical pathway indicated by the line c does not reach the line CCD 23 due to the knife edge 31, a dark image is formed on a portion imaginarily extending from the line c on the line CCD 23. However, as described in Fig. 3, since a gentle brightness gradient is formed from the dark region to the bright region, it is possible to obtain a clear image of the convex defect.

In Fig. 12, B is an image obtained from the line CCD and C is a graph depicting brightness of the image B. It is possible to obtain a clear image using the knife edge as in B and C of Fig. 7.

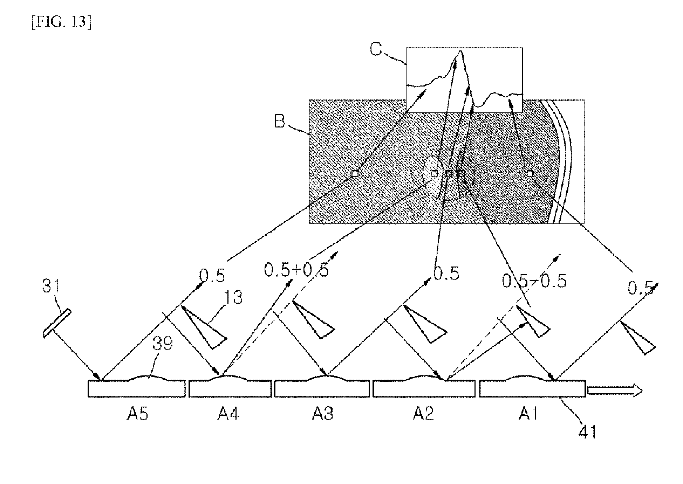

Fig. 13 is a diagram explaining effects of the knife edge with respect to an image and brightness when a knife edge is applied to the reflective inspection object.

Fig. 13 shows an optical pathway of light when the convex defect of the reflective inspection object 41 shown in Fig. 12 is moved below the slit of the mask 33. When viewing the reflective inspection object 41 above the slit during movement of the reflective inspection object 41 below the slit, optical pathways of light reflected by the retro-reflector plate 31 are sequentially represented by (A1), (A2), (A3), (A4), and (A5). In the state of (A1), the light reflected by the retro-reflector plate 31 is incident on and reflected by a defect-free portion on the inspection object. Thus, the inspection object is shown as having an average brightness in a CCD image B and an average intensity in a graph C.

In the state of (A2), the light reflected by the retro-reflector plate 31 is incident on and refracted by a front portion of the convex defect 39, so that the light is blocked by the knife edge 13. As a result, the inspection obj ect is shown as having the darkest brightness in the image B and the lowest intensity in the graph C.

In the state of (A3), the light reflected by the retro-reflector plate 31 is incident on and reflected by a planar portion near the apex of the convex defect 39. Thus, similar to the case where the light is not blocked by the knife edge 13 and the convex defect 39 is not present, the inspection object is shown as having an average brightness in the image B and an average intensity in the graph C.

In the state of (A4), the light reflected by the retro-reflector plate 31 is reflected by a rear portion of the convex defect 39 and overlaps with other rays, thereby causing compensation of the light. In this case, the inspection object is shown as having high brightness in the image B and the highest intensity in the graph C.

In the state of (A5), the light reflected by the retro-reflector plate is reflected by the inspection object after the convex defect 39 passes the slit of the mask, and the image and graph are the same as those in the state of (A1).

As such, when the light reflected by the retro-reflector plate is non-uniformly reflected by the convex protrusion 39, the light reflected near the apex of the defect and the light non-uniformly reflected by the convex defect 39 undergo compensation and counterbalancing. In this case, since the counterbalanced light is blocked by the knife edge, only compensation of light is allowed. As a result, difference in brightness between a compensated point and a counterbalanced point becomes insignificant so that an image of the convex defect 39 has high sensitivity and the intensity gradient of light can be obtained, thereby providing three-dimensional information of the image.

In addition, according to the embodiment of the invention, the inspection device employs a knife edge to enhance sensitivity of an image. Here, the sensitivity of an image may be further enhanced by placing the knife edge near an optical axis. Further, when light is refracted and reflected at the same angle by a defect on an inspection object, a smaller light source provides greater variation in amount of light than a larger light source, thereby enhancing sensitivity of the image. Furthermore, when the width of the slit disposed in front of the inspection obj ect is reduced, it is possible to obtain a more sensitive image by reducing interference of light.

### [Industrial Applicability]

According to the embodiments of the invention, the inspection device employs a knife-edge to provide a highly sensitive image having a gentle brightness gradient, thereby providing a clear image of a defect in an inspection object.

In addition, the inspection device employs a retro-reflective plate to allow a user to stably recognize a defect of an inspection object even in the case where the inspection object has a rounded portion or is subjected to vibration.

## Claims

1. An inspection device for defect inspection, comprising:
a light source illuminating a reflective inspection object which reflects light incident thereon;
a retro-reflector plate reflecting the light back to the reflective inspection object when the light reflected by the reflective inspection object is incident on the retro-reflector plate;
a focusing lens focusing the light which is reflected by the reflective inspection object after being reflected back to the reflective inspection object by the retro-reflector plate;
a camera capturing the light passing through the focusing lens to form an image; and
a knife edge disposed between the focusing lens and the reflective inspection object to be perpendicular to an optical axis of the focusing lens.

2. The inspection device of claim 1, wherein a mask having a slit is disposed between the reflective inspection object and the light source, and the reflective inspection obj ect is moved to allow the image photographed by the camera to be obtained through line scanning.

3. The inspection device of claim 1 or 2, wherein sensitivity of the image is enhanced by performing one or two or more selected from an operation of reducing a size of the light source, an operation of reducing a slit width of the mask, and an operation of placing the knife edge near the optical axis.

4. The inspection device according to claim 2, wherein the light emitted from the light source is incident on the reflective inspection object at a tilted angle, and is subjected to reflection by the reflective inspection object to be incident on the retro-reflector plate, retro-reflection to the reflective inspection object by the retro-reflector plate, and reflection by a defect of the reflective inspection object, the knife edge blocking counterbalanced light from entering the focusing lens when the light reflected by the defect is subjected to compensation and counterbalancing.

5. An inspection device for defect inspection, comprising:
a light source illuminating a transmissive inspection object which allows incident light to pass therethrough;
a retro-reflector plate reflecting the light back to the transmissive inspection object when the light passing through the transmissive inspection object is incident on the retro-reflector plate;
a mask formed with a slit and disposed between the light source and the transmissive inspection object;
a camera capturing the light to form an image;
a focusing lens focusing the light on the camera when the light reflected back by the retro-reflector plate passes through the transmissive inspection object and reaches the focusing lens; and
a knife edge disposed between the focusing lens and the transmissive inspection object to be perpendicular to an optical axis of the focusing lens.

6. The inspection device according to claim 5, wherein sensitivity of the image is enhanced by performing one or two or more selected from an operation of reducing a size of the light source, an operation of reducing a slit width of the mask, and an operation of placing the knife edge near the optical axis.
